# EUROPÄISCHE PATENTSCHRIFT

(11) **EP 0 740 673 B1**
(45) Veröffentlichungstag und Bekanntmachung des Hinweises auf die Patenterteilung: **17.09.1997**
(21) Anmeldenummer: 95905130.1
(22) Anmeldetag: 10.01.1995
(51) Int. Cl.: C08G 12/38, C08L 61/30, C08L 97/02

(54) **BINDEMITTEL FÜR DIE HERSTELLUNG VON LIGNOCELLULOSEHALTIGEN FORMKÖRPERN**
BINDERS FOR THE PRODUCTION OF LIGNOCELLULOSE-CONTAINING MOULDINGS
LIANT POUR LA PRODUCTION DE PIECES MOULEES CONTENANT DE LA LIGNOCELLULOSE

(30) Priorität: 20.01.1994 DE 4401562
(43) Veröffentlichungstag der Anmeldung: 06.11.1996
(73) Patentinhaber: BASF AKTIENGESELLSCHAFT, 67056 Ludwigshafen (DE)
(72) Erfinder: HITTINGER, Christel, D-25421 Pinneberg (DE); LEHNERT, Heinz, D-67227 Frankenthal (DE); SCHATZ, Hermann, D-67435 Neustadt (DE); NIESSNER, Manfred, D-67105 Schifferstadt (DE)
(86) Internationale Anmeldenummer: EP9500071
(87) Internationale Veröffentlichungsnummer: WO9520000

(56) Entgegenhaltungen:
- HOLZ ALS ROH- UND WERKSTOFF, Bd. 51, 1993 BERLIN DE, Seiten 197-207, XP 000360949 E.KEHR ET ALL. 'Feuchtebeständigkeit und Hydrolyseresistenz von Holz-zu-Holz-Bindungen in Spanplatten, hergestellt mit Formaldehydarmen modifizierten Harnstoff-Formaldehydeharzen unter Einsatz verschiedener Härtungsbeschleuenigersysteme'

## Beschreibung

Die vorliegende Erfindung betrifft eine als Bindemittel für die Herstellung von lignocellulosehaltigen Formkörpern geeignete Mischung aus
(A) einem wäßrigen Kondensationsharz aus
   (a) 1 mol Melamin,
   (b) 3 bis 11 mol Formaldehyd,
   (c) 0 bis 0,5 mol aromatischer oder teilaromatischer Hydroxyverbindungen
   (d) 0 bis 0,1 mol weiterer aminoplastbildender Komponenten,
   und
(B) einer Harnstoff-Gesamtmenge von 0,8 bis 13 mol, wobei bis zu 25 % dieser Gesamtmenge bei der Herstellung von (A) zugegeben werden können.

Weiterhin betrifft die Erfindung ein Verfahren zur Herstellung solcher Mischungen sowie deren Verwendung zur Herstellung von lignocellulosehaltigen Formkörpern.

Es ist schon lange bekannt, daß mit Harnstoff-Formaldehyd-Harzen, die unter sauren Bedingungen härten, Holz und andere lignocellulosehaltige Komponenten verklebt werden können. Allerdings ist die Wasserfestigkeit solcher Klebverbindungen für viele Zwecke nicht ausreichend. Deshalb muß häufig auf die alkalisch härtenden Phenol-Formaldehyd-Harze zurückgegriffen werden. Diese haben allerdings die Nachteile, teurer zu sein, langsamer auszuhärten, noch freies Phenol zu enthalten, eine dunkle Farbe anzunehmen und außerdem einen hohen Alkaligehalt aufzuweisen, wodurch Schwierigkeiten beim Furnieren und Beschichten verursacht werden und sogenannte "Ausblühungen" des Alkalis befürchtet werden müssen.

Diese Nachteile können teilweise durch die Verwendung von Melamin-haltigen Harnstoff-Formaldehyd-Harzen, die zur Verstärkung noch gewisse Anteile an Phenol enthalten können, vermieden werden. Damit in einem lignocellulosehaltigen Formkörper, der mit einem solchen Harz hergestellt wurde, kein freies Phenol mehr enthalten ist, stellt man in einem separaten Arbeitsgang ein Kondensat aus Phenol und Formaldehyd und gegebenenfalls einem Alkali(hydrogen)sulfit her, das man dann dem Harnstoff-Melamin-Formaldehyd-Harz an geeigneter Stelle zusetzt. Solche Harze härten unter sauren Bedingungen, benötigen etwas kürzere Härtungszeiten als Phenol-Harze und ergeben ebenfalls wasserfeste Verleimungen. Ihre Nachteile sind jedoch die aufwendige, mehrstufige Herstellung, der hohe Preis des Melamins und die im Vergleich zu reinen Harnstoff-Formaldehyd-Harzen immer noch relativ lange Härtungszeit, die die Herstellkosten für Spanplatten oder andere damit verleimte lignocellulosehaltige Produkte erhöht.

Aus der EP-A 25 245 sind melamin-modifizierte Aminoplastharze bekannt, welche durch Mischen von Harnstoff-Formaldehyd-Harzen mit Melamin-Harnstoff-Formaldehyd-Harzen oder durch Mischen von Melamin-Formaldehyd-Harzen mit Harnstoff-Formaldehyd-Harzen erhalten werden.

In der DE-A 24 55 420 wird ein Verfahren zur Herstellung von Melamin-Harnstoff-Formaldehyd-Harzen durch Kondensation von Melamin mit Harnstoff-Formaldehyd-Vorkondensaten beschrieben.

Aus der EP-P 54 755 ist ein Verfahren zur Herstellung von Melamin-Formaldehyd-Tränkharzen bekannt, bei dem die Melamin-Formaldehyd-Kondensate zur Erhöhung der Lagerstabilität mit einer Harnstoff-Lösung versetzt werden.

Nach der Lehre der US-A 4 123 579 werden Tränkharze aus MelaminFormaldehyd-Kondensaten nach der Kondensation zur Verbesserung des Fließverhaltens mit kleineren Mengen an Harnstoff versetzt.

In der DE-A 34 42 454 wird empfohlen, Harnstoff-Melamin-Formaldehyd-Kondensationsprodukte in der Weise herzustellen, daß man den Formaldehyd in Form einer wäßrigen Lösung mit Harnstoff für die Reaktion mit dem Melamin einsetzt. Hierbei könne bis zu etwa 50 Gew.-% des insgesamt benötigten Harnstoffs während, vor oder nach der Kondensation auch in anderer Form als der Formaldehyd-lösung eingesetzt werden. Ein gewisser Teil des Harnstoffs bliebe ungebunden, damit er als Formaldehyd-Fänger diene.

Alle bekannten Harze lassen aber bezüglich der Verwendbarkeit als Bindemittel insofern noch Verbesserungen zu, als sie den Forderungen nach guter Feuchtigkeitsresistenz der Formkörper bei guter Festigkeit sowie einfacher und kostengünstiger Herstellung der Harze jeweils nur bedingt entsprechen.

Aufgabe der vorliegenden Erfindung war es, verbesserte als Bindemittel geeignete wäßrige Harze auf Basis von Melamin, Harnstoff und Formaldehyd zu finden.

Demgemäß wurden die eingangs definierten Mischungen gefunden.

Die wäßrigen Kondensationsprodukte (Komponente A) werden durch Umsetzung von 1 mol Melamin (a) mit (b) 3 bis 11 mol, vorzugsweise 3,6 bis 9,5 mol, besonders bevorzugt 4 bis 7 mol Formaldehyd erhalten.

Melamin wird üblicherweise in fester Form eingesetzt. Formaldehyd kommt üblicherweise in Form konzentrierter wäßriger Lösungen, beispielsweise als 40 gew.-%ige wäßrige Lösung oder als Paraformaldehyd zum Einsatz. Möglich ist auch die Verwendung einer konzentrierten wäßrigen Lösung von Formaldehyd und Harnstoff, wenn ein Teil des Harnstoffs bereits während der Kondensation zugegeben wird.

Weiterhin können die wäßrigen Kondensationsprodukte (A) bis zu 0,5 mol, pro mol Melamin, einer aromatischen oder teilaromatischen Hydroxykomponente (c) enthalten. Als solche Komponenten kommen vor allem ein- oder mehrwertige Phenole in Betracht, beispielsweise Resorcine, Hydrochinon oder vorzugsweise Phenol, ebenso wie mehrkernige Verbindungen wie beispielsweise α- oder β-Naphtol oder teilaromatische Dihydroxyverbindungen wie 2,2-Bis(4-hydroxyphenyl)-propan (Bisphenol A), 1,1-Bis-(4-hydroxyphenyl)-ethan oder 1,1-Bis-(4-hydroxyphenyl)-isobutan. Phenol wird vorzugsweise in Form von Phenol-Formaldehyd-Vorkondensaten, welche beispielsweise nach der DE-A 31 25 874 erhalten werden können, zugegeben oder aber auch in freier Form.

Weiterhin können als aminoplastbildende Komponenten (d) modifizierte Harnstoffe wie Ethylenharnstoff, Ethylendiharnstoff oder Dipropylentriharnstoff, oder Guanamine wie Benzoguanamin oder Amide wie Caprolactam in Mengen von bis zu 0,1 mol bei der Herstellung von (A) zugegeben werden.

Die Erfindung betrifft auch Verfahren zur Herstellung von als Leimharzen geeigneten Mischungen, dadurch gekennzeichnet, daß man
(A) in wäßrigem Medium bei pH-Werten von 7,5 bis 10,0 und Temperaturen von 50 bis 100°C
   (a) 1 mol Melamin,
   (b) 3 bis 11 mol Formaldehyd,
   (c) 0 bis 0,5 mol Phenol und
   (e) 0 bis 0,1 mol weiterer aminoplastbildender Komponenten,
   umsetzt, und
(B) anschließend einer Gesamtmenge an Harnstoff von 0,8 bis 13 mol bei Temperaturen von 20 bis 80°C zugibt, wobei bis zu 25 % dieser Gesamtmenge bei der Umsetzung (A) vorhanden sein können.

Die Umsetzung wird vorteilhafterweise so durchgeführt, daß man 1 mol Melamin mit 3 bis 11 mol Formaldehyd und bis zu 25 % der insgesamt benötigten Menge an Harnstoff bei einer Temperatur von 20 bis 40°C mischt und auf Temperatur zwischen 70 und 100°C, bevorzugt auf 75 bis 95°C erhitzt. Der pH-Wert soll dabei zwischen 7,8 und 9,5, bevorzugt zwischen 8,2 und 9,0 betragen. Unter diesen Bedingungen wird solange kondensiert, bis die Viskosität der Mischung, gemessen mit einem Platte-Platte-Viskosimeter, zwischen 10 und 1000 mPas, besonders bevorzugt 10 bis 500 mPas beträgt. Dann wird auf 10 bis 80°C, bevorzugt auf 40 bis 75°C abgekühlt.

Sodann wird das Kondensationsprodukt (A) mit der Komponente (B), einer Gesamtmenge an Harnstoff von 0,8 bis 13 mol, vorzugsweise 1,3 bis 4,5 mol, versetzt, wobei bis zu 25 % dieser Gesamtmenge bei der Herstellung des Harzes (A) bereits zugegeben werden können.

Die Zugabe des Harnstoffs erfolgt vorzugsweise in fester Form oder auch in wäßriger Lösung. Für den Fall, daß bis zu 25 % der Gesamtharnstoffmenge bereits bei der Herstellung der Kondensationsprodukte (A) zugegeben werden, kann der Harnstoff auch in Form einer konzentrierten wäßrigen Lösung von Harnstoff und Formaldehyd zugeben werden.

Nach der bevorzugten Ausführungsform wird der Harnstoff als Gesamtmenge nach Beendigung der Kondensation der Harze (A) mit diesen vermischt. Die Art der Zugabe ist unkritisch. Man kann den Harnstoff unter das Harz (A) zwischen oder auch das Harz (A) in eine Harnstofflösung einrühren. Die Vermischung der beiden Komponenten kann bei Raumtemperatur erfolgen oder auch in der Weise, daß das noch bis zu 80°C warme Harz mit dem Harnstoff vermischt wird. Danach kann die fertige Harzmischung auf Raumtemperatur abgekühlt werden. Der pH-Wert des abgekühlten Harzes soll zwischen 8,5 und 10,0 liegen. Es empfiehlt sich, nur dann einen Teil des Harnstoffs schon bei der Herstellung der Komponente (A) zuzugeben, wenn mehr als 4 mol Formaldehyd pro mol Melamin eingesetzt werden.

Zur Einstellung der pH-Werte können die allgemein üblichen alkalischen Verbindungen, wie Alkali- und Erdalkalihydroxide in Form ihrer wäßrigen Lösungen, tertiäre Amine wie zum Beispiel Tributylamin oder Triethylamin, und tertiäre Alkanolamine, wie z.B. Triethanolamin, Methyldiethanolamin verwendet werden.

Das erfindungsgemäße Verfahren wird üblicherweise so durchgeführt, daß der Feststoffgehalt der Harze 50 bis 70 Gew.-%, bezogen auf die wäßrige Harzmischung beträgt. Es ist jedoch auch möglich, den Feststoffgehalt durch das Abdestillieren von Wasser bei 30 bis 45°C im Vakuum zu erhöhen.

Die Viskosität der erhaltenen wäßrigen Harze liegt bei 20°C im Bereich von 10 bis 800 mPas, bevorzugt zwischen 20 und 500 mPas bei einem Feststoffgehalt von etwa 60 %, so daß diese Produkte auch bei höheren Feststoffgehalten noch sehr leicht handhabbar sind. Sie lassen sich insbesondere leicht pumpen, mit einem Härter mischen und versprühen. Sie verteilen sich auch sehr leicht auf dem Substrat, was weitere Vorteile bei der Verarbeitung mit sich bringt.

Die Produkte sind im allgemeinen mehrere Wochen bei 20°C lagerstabil.

Es ist außerdem möglich, weitere Additive in Mengen bis zu 10 Gew.-% in diese Harze einzuarbeiten. Dabei kann es sich z.B. um Alkohole wie Ethylenglykol, Diethylenglykol oder Saccharide handeln. Ebenso können wasserlösliche Polymere auf der Basis Acrylamid, Ethylenoxid, N-Vinylpyrrolidon, Vinylacetat sowie Copolymere mit diesen Monomeren eingesetzt werden.

Die erfindungsgemäßen Harze eignen sich hervorragend als Bindemittel zur Herstellung lignocellulosehaltiger Formkörper wie zum Beispiel Spanplatten, Sperrholz oder Faserplatten.

Solche Formkörper lassen sich beispielsweise herstellen, indem man 5 bis 30 Gew.-% Festharz, bezogen auf lignocellulosisches Material bei Temperaturen von 120 bis 250°C unter Druck verpreßt. Zusätzlich können noch Härter wie zum Beispiel Ammoniumchlorid, Ammoniumsulfat, Ammoniumnitrat, Ammoniumphosphate, Ameisensäure, Schwefelsäure oder andere anorganische oder organische Säuren mitverwendet werden. Üblicherweise werden die Härter mit dem wäßrigen Bindemittel vermischt ("Leimflotte") und dann auf die Späne gesprüht.

Außerdem eignen sich die erfindungsgemäßen Mischungen auch zur Herstellung von Formkörpern wie Balken, die durch Flächenverleimung von Holzteilen erhalten werden.

Vorteilhaft an den erfindungsgemäßen wäßrigen Mischungen ist neben der einfachen Herstellweise, bei der gegenüber den herkömmlichen Verfahren auf eine Cokondensation des Harnstoffs verzichtet werden kann, daß gegenüber herkömmlichen Harzen vergleichbarer Zusammensetzung eine Verbesserung der verarbeitungstechnischen Eigenschaften erzielt wird, und zwar dergestalt, daß bei vergleichbaren Melaminanteilen eine verbesserte Feuchtigkeitsresistenz und kürzere Gelierzeiten und damit höhere Verarbeitungsgeschwindigkeiten erreicht werden. Bei gegenüber herkömmlichen Harzen gleich guten Verarbeitungseigenschaften kann der Anteil des teuren Melamins verringert werden. Damit kann insgesamt die Wirtschaftlichkeit der Herstellung von Formkörpern aus lignocellulosehaltigen Materialien verbessert werden.

### Beispiele

Als Formaldehydlösung wurde eine 40 gew.-%ige wäßrige Lösung verwendet.

Die Einstellung der pH-Werte erfolgte mit wäßriger Natriumhydroxid-Lösung.

Die Viskositäten wurden bei 20°C mit einem Platte-Platte-Viskosimeter gemessen. Die Festgehalte wurden durch zweistündiges Trocknen bei 120°C in einem Umlufttrockenschrank bestimmt. Die Gelierzeiten wurden nach Zugabe von 8 Teilen 20 %iger Ammoniumsulfatlösung zu 100 Teilen Leim bei 100°C gemessen.

### Beispiel 1

600 g Formaldehyd-Lösung und 264 g Melamin wurden auf 95°C erhitzt und 120 Minuten lang bei pH 8,6 kondensiert. Die Viskosität der Mischung betrug 150 mPas (gemessen bei 20°C). Dann wurde auf 75°C abgekühlt und 272 g Harnstoff zugegeben. Nach dem Abkühlen auf 20°C wurden folgende Werte gemessen: Viskosität 65 mPas, Festgehalt 58,7 %, Gelierzeit 50 Sekunden.

### Beispiel 2

528 g Formaldehyd-Lösung und 222 g Melamin wurden auf 95°C erhitzt und 120 Minuten lang bei pH 8,8 kondensiert. Die Viskosität der Mischung betrug 110 mPas (gemessen bei 20°C). Dann wurde auf 75°C abgekühlt und 246 g Harnstoff zugegeben. Nach dem Abkühlen auf 20°C wurden folgende Werte gemessen: Viskosität 60 mPas, Festgehalt 58,8 %, Gelierzeit 58 Sekunden.

### Beispiel 3

539 g Formaldehyd-Lösung und 234 g Melamin wurden auf 95°C erhitzt und 120 Minuten lang bei pH 8,7 kondensiert. Die Viskosität der Mischung betrug 100 mPas (gemessen bei 20°C). Dann wurde auf 75°C abgekühlt und 245 g Harnstoff zugegeben. Nach dem Abkühlen auf 20°C wurden folgende Werte gemessen: Viskosität 40 mPas, Festgehalt 59,4 %, Gelierzeit 55 Sekunden.

### Beispiel 4

1200 g Formaldehyd-Lösung, 495 g Melamin und 24 g Harnstoff wurden auf 95°C erhitzt und 120 Minuten lang bei pH 8,5 kondensiert. Die Viskosität der Mischung betrug 130 mPas (gemessen bei 20°C). Dann wurde auf 75°C abgekühlt und 540 g Harnstoff zugegeben. Nach dem Abkühlen auf 20°C wurden folgende Werte gemessen: Viskosität 60 mPas, Festgehalt 58,6 %, Gelierzeit 58 Sekunden.

### Beispiel 5

648 g Formaldehyd-Lösung, 222 g Melamin und 45 g Harnstoff wurden auf 95°C erhitzt und 120 Minuten lang bei pH 8,5 kondensiert. Dann wurde auf 75°C abgekühlt und 255 g Harnstoff zugegeben. Nach dem Abkühlen auf 20°C wurden folgende Werte gemessen: Viskosität 30 mPas, Festgehalt 57,3 %, Gelierzeit 56 Sekunden.

### Beispiel 6 (Vergleichsbeispiel)

556 g Formaldehyd-Lösung, 264 g Melamin und 111 g Harnstoff wurden auf 95°C erhitzt und 60 Minuten lang bei pH 8,6 kondensiert. Die Viskosität der Mischung betrug 490 mPas (gemessen bei 20°C). Dann wurde auf 75°C abgekühlt und 140 g Harnstoff zugegeben. Nach dem Abkühlen auf 20°C wurden folgende Werte gemessen: Viskosität 150 mPas, Festgehalt 57,9 %, Gelierzeit 80 Sekunden.

### Beispiel 7 (Vergleichsbeispiel gemäß DE-OS 34 42 454)

Eine Mischung aus 445 g einer konzentrierten wäßrigen Lösung aus 50 Gew.-% Formaldehyd, 25 Gew.-% Harnstoff und 25 Gew.-% Wasser, 246 g Melamin und 104 g Wasser wurde auf 95°C erhitzt und 55 min lang bei pH 8,6 kondensiert. Die Viskosität des Reaktionsgemisches betrug 1220 mPa.s (20°C). Dann wurde auf 75°C abgekühlt und 140 g Harnstoff zugegeben. Nach dem Abkühlen auf 20°C wies das Harz eine Viskosität von 420 mPa.s, einen Festgehalt von 66,5 Gew.-% und eine Gelierzeit von 76 sec auf.

### Anwendungsbeispiel

Mit den Harzen gemäß den Beispielen 1 bis 7 wurden Leimflotten für die Herstellung von Spanplatten hergestellt. Dazu wurden 100 g Harz mit 8 g einer 20 gew.-%igen wäßrigen Ammoniumsulfat-Lösung versetzt und der Festgehalt der Leimflotte durch Zugabe von Wasser auf 51,8 Gew.-% eingestellt. Es wurden Spanplatten mit einer Dicke von 19 mm hergestellt, wobei der Festharzgehalt auf atro Späne 12 Gew.-% betrug, die Preßzeit 114 Sekunden bei 210°C.

Die Eigenschaften der Spanplatten sind in der nachstehenden Tabelle aufgeführt.

**Tabelle**

| Harz gemäß Bsp. Nr. | 1 | 2 | 3 | 4 | 5 | 6 | 7 |
|---|---|---|---|---|---|---|---|
| Gelierzeit [s] | 50 | 58 | 55 | 58 | 56 | 80 | 87 |
| Scherfestigkeit V 20 [N/mm²] | 3,06 | 2,73 | 2,61 | 3,57 | 3,81 | 2,78 | 2,61 |
| Querzugfestigkeit V 100 [N/mm²] ¹⁾ | 0,44 | 0,52 | 0,51 | 0,54 | 0,63 | 0,39 | 0,30 |
| Quellung nach 24 h [%] | 14,9 | 11,1 | 12,2 | 13,1 | 12,9 | 18,8 | 16,9 |
| Perforator-Wert [mg HCHO/100 g atro Platte] | 4,9 | 5,0 | 5,2 | 5,1 | 6,3 | 4,9 | 5,2 |

| | | | | | | | |
|---|---|---|---|---|---|---|---|
| ¹⁾ nach DIN 68763 ²⁾ nach DIN EN 120 | | | | | | | |

## Patentansprüche

1. Als Bindemittel für die Herstellung von lignocellulosehaltigen Formkörpern geeignete Mischung aus
(A) wäßrigen Kondensationsprodukten aus
(a) 1 mol Melamin und
(b) 3 bis 11 mol Formaldehyd,
und
(B) 0,8 bis 13 mol Harnstoff, wobei bis zu 25 % dieser Gesamtmenge an Harnstoff bei der Herstellung der Kondensationsprodukte (A) zugegeben werden können.

2. Mischungen nach Anspruch 1, wobei die Harnstoff-Gesamtmenge nach Beendigung der Kondensation der Kondensationsprodukte (A) zugegeben wird.

3. Mischung nach Anspruch 1 oder 2, enthaltend Kondensationsprodukte (A), welche zusätzlich bis zu 0,5 mol einer aromatischen oder teilaromatischen Hydroxykomponente enthalten.

4. Mischung nach einem der Ansprüche 1 bis 3, enthaltend Kondensationsprodukte (A), welche zusätzlich bis zu 0,1 mol einer weiteren aminoplastbildenden Komponente enthalten.

5. Mischungen gemäß einem der Ansprüche 1 bis 4, erhältlich durch
(A) Kondensation von
(a) 1 mol Melamin,
(b) 3 bis 11 mol Formaldehyd,
(c) 0 bis 0,5 mol Phenol und
(d) 0 bis 0,1 mol weiterer aminoplastbildender Komponenten,
in wäßrigem Medium bei pH-Werten von 7,5 bis 10,0 und Temperaturen von 50 bis 100°C,
und
(B) anschließende Zugabe von einer Gesamtmenge an Harnstoff von 0,8 bis 13 mol, wobei bis zu 25 % dieser Gesamtmenge bei der Herstellung der Kondensationsprodukte (A) zugegeben werden können.

6. Verfahren zur Herstellung von als Leimharzen geeigneten Mischungen, dadurch gekennzeichnet, daß man
(A) in wäßrigem Medium bei pH-Werten von 7,5 bis 10,0 und Temperaturen von 50 bis 100°C
(a) 1 mol Melamin,
(b) 3 bis 11 mol Formaldehyd,
(c) 0 bis 0,5 mol Phenol und
(e) 0 bis 0,1 mol weiterer aminoplastbildender Komponenten,
umsetzt, und
(B) anschließend einer Gesamtmenge an Harnstoff von 0,8 bis 13 mol bei Temperaturen von 20 bis 80°C zugibt, wobei bis zu 25 % dieser Gesamtmenge bei der Umsetzung (A) vorhanden sein können.

7. Verwendung von Mischungen gemäß einem der Ansprüche 1 bis 6 als Bindemittel bei der Herstellung von lignocellulosehaltigen Formkörpern.

8. Lignocellulosehaltiger Formkörper, enthaltend als Bindemittel Mischungen gemäß einem der Ansprüche 1 bis 6.

## Claims

1. A mixture which is suitable as a binder for the production of lignocellulose-containing moldings and comprises
(A) aqueous condensates of
(a) 1 mol of melamine and
(b) from 3 to 11 mol 'of formaldehyde
and
(B) from 0.8 to 13 mol of urea, where up to 25% of this total amount of urea may be added during the preparation of the condensates (A).

2. A mixture as claimed in claim 1, wherein the total amount of urea is added to the condensates (A) after the end of the condensation.

3. A mixture as claimed in claim 1 or 2, containing condensates (A) which additionally contain up to 0.5 mol of an aromatic or partly aromatic hydroxy component.

4. A mixture as claimed in any of claims 1 to 3, containing condensates (A) which additionally contain up to 0.1 mol of a further aminoplast-forming component.

5. A mixture as claimed in any of claims 1 to 4, obtainable by
(A) condensation of
(a) 1 mol of melamine,
(b) from 3 to 11 mol of formaldehyde,
(c) from 0 to 0.5 mol of phenol and
(d) from 0 to 0.1 mol of further aminoplast-forming components,
in an aqueous medium at a pH of from 7.5 to 10.0 and at from 50 to 100°C,
and
(B) subsequent addition of a total amount of from 0.8 to 13 mol of urea, where up to 25% of this total amount may be added during the preparation of the condensates (A).

6. A process for the preparation of a mixture which is suitable as adhesive resins, wherein
(A)
(a) 1 mol of melamine,
(b) from 3 to 11 mol of formaldehyde,
(c) from 0 to 0.5 mol of phenol and
(d) from 0 to 0.1 mol of further aminoplast-forming components,
are reacted in an aqueous medium at a pH of from 7.5 to 10.0 and at from 50 to 100°C, and
(B) a total amount of from 0.8 to 13 mol of urea is then added at from 20 to 80°C, where up to 25% of this total amount may be present during the reaction (A).

7. The use of a mixture as claimed in any of claims 1 to 6 as a binder in the production of lignocellulose-containing moldings.

8. A lignocellulose-containing molding containing, as a binder, a mixture as claimed in any of claims 1 to 6.

## Revendications

1. Mélange convenant comme liant pour la fabrication d'articles moulés contenant de la lignocellulose, constitué
(A) de produits de condensation aqueux de
(a) 1 mole de mélamine et
(b) 3 à 11 moles de formaldéhyde
et
(B) de 0,8 à 13 moles d'urée, où jusqu'à 25% de cette quantité totale d'urée peuvent être ajoutés lors de la préparation des produits de condensation (A).

2. Mélange suivant la revendication 1, caractérisé en ce que l'on ajoute la quantité totale de l'urée après l'achèvement de la condensation des produits de condensation (A).

3. Mélange suivant la revendication 1 ou 2, contenant des produits de condensation (A) qui contiennent complémentairement jusqu'à 0,5 mole d'un composant hydroxylé aromatique ou partiellement aromatique.

4. Mélange suivant l'une quelconque des revendications 1 à 3, contenant des produits de condensation (A) qui contiennent complémentairement jusqu'à 0,1 mole d'un composant aminoplastogène supplémentaire.

5. Mélange suivant l'une quelconque des revendications 1 à 4, que l'on peut obtenir par
(A) la condensation de
(a) 1 mole de mélamine,
(b) 3 à 11 moles de formaldéhyde,
(c) 0 à 0,5 mole de phénol et
(d) 0 à 0,1 mole d'autres composants aminoplastogènes,
en milieu aqueux, à des valeurs de pH de 7,5 à 10,0 et à des températures de 50 à 100°C,
et
(B) l'addition subséquente d'une quantité totale d'urée de 0,8 à 13 moles, où jusqu'à 25% de cette quantité totale peuvent être ajoutés au cours de la préparation des produits de condensation (A).

6. Procédé de préparation de mélanges convenant à titre de résines collantes, caractérisé en ce que
(A) on fait réagir, en milieu aqueux, à des valeurs de pH de 7,5 à 10,0 et à des températures de 50 à 100°C,
(a) 1 mole de mélamine,
(b) 3 à 11 moles de formaldéhyde,
(c) 0 à 0,5 mole de phénol et
(d) 0 à 0,1 mole d'autres composants aminoplastogènes,
et
(B) on ajoute ensuite une quantité totale d'urée de 0,8 à 13 moles, à des températures de 20 à 80°C, où jusqu'à 25% de cette quantité totale peuvent être présents au cours de la réaction (A).

7. Utilisation de mélanges suivant l'une quelconque des revendication 1 à 6, à titre de liants lors de la fabrication d'articles moulés contenant de la lignocellulose.

8. Articles moulés contenant de la lignocellulose, contenant, à titre de liant, des mélanges suivant l'une quelconque des revendications 1 à 6.
